(19) Europäisches Patentamt
European Patent Office
Office européen des brevets

(11) **EP 3 649 029 B1**

(12) **EUROPÄISCHE PATENTSCHRIFT**

(45) Veröffentlichungstag und Bekanntmachung des Hinweises auf die Patenterteilung:
**27.01.2021  Patentblatt 2021/04**

(21) Anmeldenummer: **18737232.1**

(22) Anmeldetag: **02.07.2018**

(51) Int Cl.:
**B61B 12/06** *(2006.01)*      **B61B 12/00** *(2006.01)*

(86) Internationale Anmeldenummer:
**PCT/EP2018/067744**

(87) Internationale Veröffentlichungsnummer:
**WO 2019/007870 (10.01.2019 Gazette 2019/02)**

(54) **SEILBAHN UND VERFAHREN ZUM BETREIBEN EINER SEILBAHN**

CABLEWAY AND METHOD FOR OPERATING A CABLEWAY

TÉLÉPHÉRIQUE ET PROCÉDÉ POUR FAIRE FONCTIONNER UN TÉLÉPHÉRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA TN**

(30) Priorität: **04.07.2017  AT 505502017**

(43) Veröffentlichungstag der Anmeldung:
**13.05.2020  Patentblatt 2020/20**

(73) Patentinhaber: **Innova Patent GmbH**
**6922 Wolfurt (AT)**

(72) Erfinder:
• **HOFMAYR, Christoph**
**6850 Dornbirn (AT)**
• **PFEIFER, Daniel**
**6580 Sankt Anton am Arlberg (AT)**

(74) Vertreter: **Patentanwälte Pinter & Weiss OG**
**Prinz-Eugen-Straße 70**
**1040 Wien (AT)**

(56) Entgegenhaltungen:
**EP-A2- 1 837 264      AT-B- 411 982**
**JP-A- H0 257 923      JP-A- 2006 335 076**

EP 3 649 029 B1

**Beschreibung**

Die gegenständliche Erfindung bezieht sich auf ein Verfahren zum Betreiben einer Seilbahn mit der zwischen zumindest zwei Stationen eine Anzahl von auf einem Förderseil hängenden Fahrzeugen bewegt werden und an zumindest einem Fahrzeug der Seilbahn mit einem Sensor die Auslenkung des Fahrzeugs aus der Vertikalen gemessen wird, wobei die Auslenkung des Fahrzeugs vor der Stationseinfahrt mit dem Sensor gemessen und an die Seilbahnsteuerung übermittelt wird. Ferner betrifft die Erfindung eine entsprechende Seilbahn.

Eine Seilbahn mit an einem umlaufenden Seil hängenden Fahrzeugen, egal ob fest gekuppelt oder kuppelbar, unterliegt besonderen Sicherheitsanforderungen. Das trifft insbesondere, aber nicht nur, auf Seilbahnen zum Befördern von Personen zu. Ein Sicherheitsrisiko stellt dabei das Pendeln eines Fahrzeugs dar, weil es dabei zu einer Kollision des Fahrzeugs mit stationären Einrichtungen der Seilbahn, wie beispielsweise einer Seilbahnstütze, zwischen den Seilbahnstützen verlaufenden Freileitungen zur Energie und/oder Datenübertragung, oder einem Bauteil an einer Stationseinfahrt, oder mit anderen Fahrzeugen kommen kann. Im schlimmsten Fall kann es dabei zum Abziehen und Abstürzen des Fahrzeugs vom Seil oder zum Entgleisen des Seiles kommen. Das Pendeln des Fahrzeugs entsteht in der Regel durch Einwirkung äußerer Kräfte auf das Fahrzeug, wie beispielsweise Wind oder mutwilliges Schaukeln des Fahrzeugs durch Passagiere. Aber auch eine einseitige Beladung des Fahrzeugs, insbesondere in Kombination mit Wind, kann zum Pendeln des Fahrzeugs führen.

Die Überwachung des Pendelns der Fahrzeuge obliegt üblicherweise dem Bedienpersonal der Seilbahn, das abschätzen muss, ob es beim Betrieb der Seilbahn zu kritischen Pendelbewegungen der Fahrzeuge kommen kann oder nicht. Gegebenenfalls hat das Bedienpersonal die Seilgeschwindigkeit zu reduzieren, oder die Seilbahn gänzlich zu stoppen. Dem Bedienpersonal stehen dazu üblicherweise die Messwerte von Windsensoren an der Strecke zur Verfügung. Es ist aber in den seltensten Fällen die ganze Seilbahnstrecke vom Bedienpersonal einsehbar und auch die klimatischen Bedingungen (z.B. Nebel, Schneefall, Regen, usw.) oder die Lichtverhältnisse (z.B. Abenddämmerung, Nacht, usw.) können die Sicht beeinträchtigen. Dazu kommt, dass ein Windsensor nur die Windverhältnisse in unmittelbarer Nähe zum Windsensor erfasst, was aber keinerlei Aussagekraft zum Wind an einer anderen Stelle der Seilbahn hat. Deshalb ist es notwendig, dass an allen neuralgischen Stellen (z.B. exponierte Seilbahnstützen) der Seilbahn Windsensoren angebracht werden, was den Aufwand erhöht. Üblicherweise gibt es Vorgaben für das Bedienpersonal, ab einer bestimmten Windstärke die Fördergeschwindigkeit zu reduzieren, oder den Betrieb der Seilbahn gänzlich einzustellen. Das ist natürlich eine sehr konservative Herangehensweise, was mitunter dazu führt, dass die Fördergeschwindigkeit reduziert wird oder die Seilbahn gar gestoppt wird, obwohl das nicht unbedingt notwendig wäre.

Demzufolge sind schon Maßnahmen bekannt geworden, um die Pendelüberwachung der Fahrzeuge sicherer und zuverlässiger zu machen.

Die EP 1 837 264 A2 beschreibt die Verwendung von Neigungssensoren an den Fahrzeugen, um die Auslenkung eines Fahrzeugs aus einer Vertikalen zu erfassen. Die Messwerte der Neigungssensoren werden über einen Sender am Fahrzeug entweder über Relaisstationen an den Seilbahnstützen oder direkt an eine Empfangsstation einer Station gesendet. Im Falle zu großer Auslenkungen wird entweder die Geschwindigkeit reduziert oder die Seilbahn gestoppt.

Die AT 411 982 B beschreibt ebenfalls die Verwendung von Neigungssensoren an den Fahrzeugen, um die Auslenkung eines Fahrzeugs zu erfassen. Zusätzlich ist am Fahrzeug die Erfassung der Windgeschwindigkeit und Windrichtung vorgesehen. Die erfassten Daten werden im Fahrzeug selbst ausgewertet und gespeichert. Bei einer Stationsdurchfahrt können die erfassten Daten auch an einen Empfänger übermittelt werden und zur Steuerung der Seilbahn verwendet werden.

Auch in der WO 95/30216 A1 wird die Auslenkung eines Fahrzeugs mittels eines Neigungssensors am Fahrzeug erfasst. Zusätzlich umfasst jedes Fahrzeug eine eindeutige Kennung. Das Fahrzeug übermittelt Neigungsinformation und Kennung an einen Empfänger an einer Seilbahnstütze, der die Neigungsinformation und Kennung an eine Seilbahnsteuerung zur Auswertung weiterleitet.

Eine besondere Gefahrenstelle stellt die Einfahrt in eine Station der Seilbahn dar, da hier viele stationäre Einrichtungen in der Nähe der Fahrzeuge angeordnet sind. Zusätzlich sind im Bereich der Einfahrt in die Station üblicherweise sogenannte Außenführungstrichter angeordnet, in die die Kuppelklemme des Fahrzeugs am Seil zur Führung einfahren soll. Bei starken Auslenkungen des Fahrzeugs bei der Stationseinfahrt kann es passieren, dass der Außenführungstrichter verfehlt wird, was zu massiven Schäden an der Seilbahn und/oder am Fahrzeug oder sogar zum Abziehen des Fahrzeugs vom Seil führen kann. Die Pendelerkennung bei Stationseinfahrt ist daher besonders kritisch und es obliegt dem Betreiber der Seilbahn sicherzustellen, dass es beim Betrieb der Seilbahn zu keinen kritischen Situationen kommen kann, beispielsweise wieder durch Überwachung der Information der Windsensoren entlang der Seilbahn durch das Bedienpersonal.

Die EP 2 147 843 A1 schlägt dazu vor, die Pendelbewegung eines Fahrzeugs vor der Stationseinfahrt durch einen Sensor, insbesondere einen Laserscanner oder eine Kamera, in der Station zu erfassen, mit dem gleichzeitig auch die Entfernung des Fahrzeugs zur Station erfasst wird, um den Antrieb der Seilbahn in Abhängigkeit von der Pendelbewegung zu steuern. Damit kann eine Pendelbewegung des Fahrzeugs quer zur Fahrtrichtung vor der Station zwar sicher erfasst werden. Eine Erkennung eines Gefahrenpotentials bei der Einfahrt des Fahrzeugs in die Station ist dabei aber nicht möglich. Fährt das Fahrzeug beispielsweise in einer Schräglage ohne Pendelbewegung auf die Station zu, würde die Steuereinrichtung nicht reagieren.

Es ist daher eine Aufgabe der gegenständlichen Erfindung ein Verfahren anzugeben, mit dem das Gefahrenpotential bei der Einfahrt eines Fahrzeugs in die Station einer Seilbahn sicherer abgeschätzt und darauf reagiert werden kann.

Diese Aufgabe wird dadurch gelöst, dass das Auftreten einer Windböe als zeitliche Änderung einer Windgeschwindigkeit mit einem vor der Stationseinfahrt mit einem vor der Stationseinfahrt an einer Seilbahnstütze angeordneten Windsensor von der Seilbahnsteuerung erfasst wird und dass die Seilbahnsteuerung die übermittelte Auslenkung des Fahrzeugs und die erfasste Windböe verknüpft und damit einen Seilbahnantrieb in Abhängigkeit von der übermittelten Auslenkung und von der erfassten Windböe steuert. Auf diese Weise kann die Seilbahnsteuerung nicht nur eine aktuelle Auslenkung eines Fahrzeugs erfassen und auswerten, sondern kann nun auch das Auftreten von Windböen in der Steuerung des Seilbahnantriebs berücksichtigen. Es wurde erkannt, dass vor allem die Kombination von Auslenkung und Windböe vor oder im Bereich der Stationseinfahrt großes Gefahrenpotential in sich birgt, das nun rechtzeitig erkannt werden kann. Die Seilbahnsteuerung kann nun rechtzeitig auf ein solches Gefahrenpotential reagieren und beispielsweise die Fahrgeschwindigkeit der Seilbahn reduzieren.

Durch die zusätzliche Erfassung der Richtung der Windböe kann von der Seilbahnsteuerung noch besser auf ein mögliches Gefahrenpotential reagiert werden, weil nicht jede Windböe aus jeder beliebigen Richtung gleichermaßen gefährlich ist. Daher können in einer vorteilhaften Ausgestaltung nur Windböen aus einer definierten Richtung berücksichtigt werden oder Windböen aus verschiedenen Richtungen verschieden berücksichtigt werden.

Um auch noch einen Nothalt des Fahrzeugs vor der Stationseinfahrt zu ermöglichen, ist vorzugsweise vorgesehen, dass die Auslenkung des Fahrzeugs und das Auftreten der Windböe, und gegebenenfalls auch die Richtung der Windböe, in einem Abstand vor der Stationseinfahrt, der größer als der Bremsweg des Fahrzeugs ist, von der Seilbahnsteuerung erfasst wird.

In einer besonders vorteilhaften Ausgestaltung ist am Fahrzeug als Sendeeinrichtung ein Funktransponder vorgesehen und der Empfänger als Lesegerät für den Funktransponder ausgeführt ist. Funktransponder sind kleine, kompakte Bauteile, die einfach am Fahrzeug angeordnet werden können. Wenn der Funktransponder in einer ganz besonders vorteilhaften Ausgestaltung als passiver Funktransponder ausgeführt ist, kann auf eine eigenständige Energieversorgung des Fahrzeugs verzichtet werden, weil das Fahrzeug dann über den Funktransponder mit elektrischer Energie versorgt werden kann. Dazu kann das Lesegerät über eine Sendeantenne ein Abfragesignal aussenden, das der Funktransponder empfängt und daraus die elektrische Energie zum Betreiben des Funktransponders und des Sensors gewinnt.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt

Fig.1 einen Stationsbereich einer Seilbahn mit Überwachung der Auslenkung eines Fahrzeugs,
Fig.2 eine schematische Darstellung des erfindungsgemäßen Vorgehens zur Überwachung der Auslenkung eines Fahrzeugs,
Fig.3 die Verwendung von Richtungsbereichen bei der Bewertung der Windböen und
Flg.4 die Verwendung eines Funktransponders zum Übermittlung der Auslenkung an die Seilbahnsteuerung.

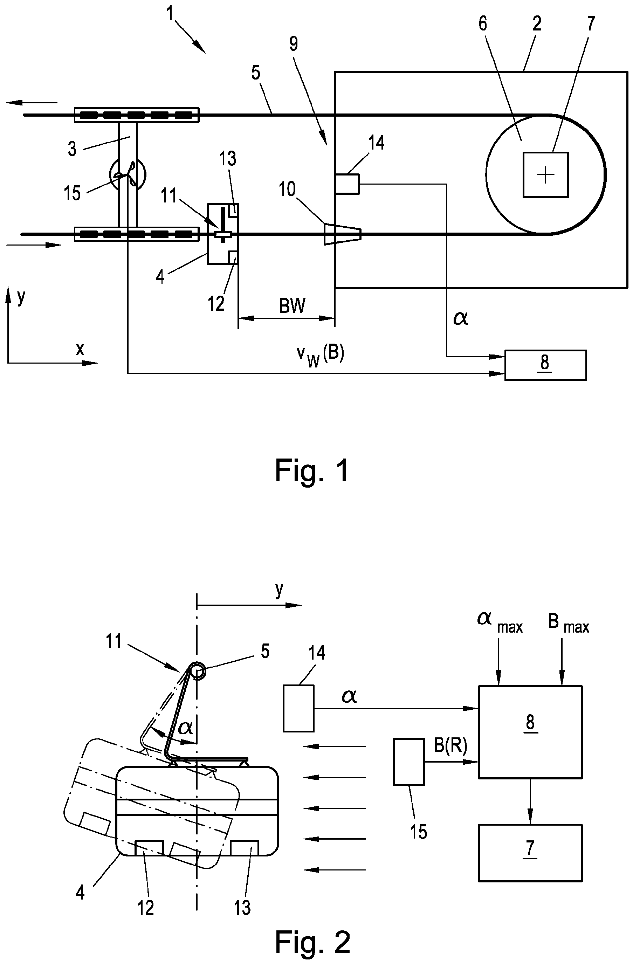

In Fig.1 ist eine Station 2 einer Seilbahn 1 und ein Teil der Förderstrecke der Seilbahn 1 mit einer Seilbahnstütze 3 vor der Stationseinfahrt dargestellt. Fahrzeuge 4 der Seilbahn 1 werden mit einem Förderseil 5, das in den Stationen 2 über Seilscheiben umgelenkt wird, befördert. Eine Seilscheibe 6 ist durch einen Seilbahnantrieb 7 angetrieben, wobei der Seilbahnantrieb 7 von einer Seilbahnsteuerung 8 gesteuert wird. An der Stationseinfahrt 9 kann ein Außenführungstrichter 10 angeordnet sein, in den die Kuppelklemme 11 des Fahrzeugs 4 einfahren soll, um das Fahrzeug 4 in der Station 2 zu führen. Für die Erfindung ist es unerheblich, ob die Fahrzeuge 4 fest mit dem Förderseil 5 gekuppelt sind, oder ob die Fahrzeuge 4 mit dem Förderseil 5 kuppelbar sind (beispielsweise mittels hinlänglich bekannter Kuppelklemmen). Ebenso ist es für die Erfindung unerheblich, ob mit der Seilbahn 1 Personen und/oder Material befördert werden. Es können auch eine Anzahl von Tragseilen zwischen den Stationen vorgesehen sein, auf denen die Fahrzeuge 4 verfahren werden.

An einem Fahrzeug 4 ist ein Sensor 12 zum Erfassen der Auslenkung des Fahrzeugs 4 aus einer Vertikalen angeordnet. Dabei interessiert vor allem die Auslenkung $\alpha$ in Richtung y quer zur Förderrichtung x (Fig.2). Es könnte aber auch die größte Auslenkung a, die nicht unbedingt in Querrichtung y auftreten muss, erfasst werden. Hierfür kommt grundsätzlich jeder geeignete Sensor in Frage, beispielsweise ein Lagesensor oder ein Beschleunigungssensor. Bei einem Beschleunigungssensor werden die vom Sensor 12 mit einer bestimmten Abtastrate gelieferten Werte beispielsweise in einen Speicher am Fahrzeug 4 geschrieben. Mit diesen Werten kann dann immer auf eine aktuelle Auslenkung $\alpha$ geschlossen werden. Mit dem Sensor 12 wird allgemein die Auslenkung $\alpha$ erfasst und an die Seilbahnsteuerung 8 übermittelt. Das erfolgt vorzugsweise mit einer kabellosen Kommunikationsverbindung, beispielsweise Funk. Dazu kann am Fahrzeug 4 eine Sendeeinrichtung 13 vorgesehen sein, die die erfasste Auslenkung α des Fahrzeugs 4 an einen Empfänger 14 in der Station 2 oder im Bereich der Station 2 sendet. Der Empfänger 14 ist mit der Seilbahnsteuerung 8 verbunden und leitet das empfangene Signal bzw. die darin übermittelte Information an die Seilbahnsteuerung 8 weiter.

Zusätzlich wird vor der Stationseinfahrt 9 auch das Auftreten von Windböen B erfasst. Dazu kann beispielsweise vor der Stationseinfahrt 9 ein Windsensor 15 vorgesehen sein, z.B. an der letzten Seilbahnstütze 3 vor der Station 2. Der Windsensor 15 übermittelt die erfassten Werte über eine geeignete Kommunikationsverbindung an die Seilbahnsteuerung 8. Dazu kann eine kabelgebundene oder kabellose Kommunikationsverbindung vorgesehen sein. Im Fall einer kabellosen Kommunikationsverbindung könnte der Windsensor 15 seine Werte beispielsweise über Funk an den Empfänger 14 in der Station 2 senden. Der Windsensor 15 misst entweder die Windgeschwindigkeit vw oder direkt Windböen B. Als Windböe B wird hier die zeitliche Änderung der Windgeschwindigkeit vw verstanden. Wird die Windgeschwindigkeit vw erfasst kann durch zeitliche Ableitung

$$B = \frac{dv_W}{dt}$$ ein Wert für die Windböe B gewonnen werden. Das kann auch in der Seilbahnsteuerung 8 erfolgen. Grundsätzlich könnte auch am Fahrzeug 4 ein Windsensor 15 zur Erfassung der Windgeschwindigkeit vw oder eines Wertes für eine Windböe vorgesehen sein, wobei es dann vorteilhaft ist, wenn der Fahrtwind des Fahrzeugs 4 herausgerechnet wird. In diesem Fall könnte die Windgeschwindigkeit $v_W$ oder der Wert für die Windböe ebenfalls mit Sendeeinrichtung 13 an den Empfänger 14 der Station 2 und damit an die Seilbahnsteuerung 8 gesendet werden.

Es kann auch vorgesehen sein, mit dem Windsensor 15 auch die Windrichtung zu erfassen. Damit kann nicht nur das Auftreten von Windböen B erfasst werden, sondern auch aus welcher Richtung R die Windböe B auftritt. Die Richtung R einer Windböe B kann das Auspendeln des Fahrzeugs 4 erheblich beeinflussen. Es kann beispielsweise eine Windböe B, welche in Förderrichtung x längs zur Bahnachse, damit von vorne oder von hinten auf das Fahrzeug 4 wirkt, deutlich schlimmer sein, als eine Windböe B in Querrichtung y. Kommt eine Windböe B seitlich zum Fahrzeug 4 ist zwar die Auslenkung in Querrichtung y direkt gegeben, jedoch ist die Angriffsfläche beispielsweise eines Sessels als Fahrzeugs 4 sehr gering. Eine Windböe B hingegen von vorne bei einem Sessel mit geöffneter Wetterschutzhaube hat eine deutlich größere Angriffsfläche, die genauso zu einer massiven Auslenkung in Förderrichtung x und Querrichtung y führen kann.

Die Seilbahnsteuerung 8 kann nun die aktuelle Auslenkung α und das Auftreten von Windböen B verknüpfen und in Abhängigkeit davon den Seilbahnantrieb 7 steuern. Dabei kann auch die Richtung R der Windböe B berücksichtigt werden. Es hat sich beim Betrieb einer Seilbahn 1 in der Praxis herausgestellt, dass insbesondere die Kombination aus Auslenkung a, z.B. aufgrund einer einseitigen Beladung des Fahrzeugs 4, und dem Auftreten von Windböen B im Bereich der Stationseinfahrt 9, unter Umständen in Abhängigkeit von der Richtung R der Windböe B, besonders gefährlich ist. Dabei muss sich das Fahrzeug 4 nicht einmal pendelnd der Stationseinfahrt 9 annähern. Wenn das Fahrzeug 4 jedoch am Förderseil 5 pendelt, dann könnte die größte Auslenkung der Pendelbewegung als Auslenkung α herangezogen werden. Bei einer bestimmten Auslenkung α und beim Auftreten bestimmter Windböen B kann es zu großen Schwingungen des Fahrzeugs 4 in Querrichtung y kommen, was dazu führen kann, dass das Fahrzeug 4 bei der Stationseinfahrt 9 einen ortsfesten Bauteil der Station 2 berührt oder sogar den Außenführungstrichter 10 verfehlt. Beides kann zu erheblichen Unfällen und zu Schäden an der Seilbahn 1 und/oder dem Fahrzeug 4 führen. Durch die erfindungsgemäße Verknüpfung der Auslenkung α mit der Erfassung des Auftretens von Windböen B kann das wirkungsvoll verhindert werden.

Dabei ist es sinnvoll eine zulässige Auslenkung $\alpha_{max}$ und eine zulässige maximale Windböe $B_{max}$ festzulegen (Fig.2). Wenn beide zulässigen Werte vor der Stationseinfahrt 9 überschritten werden, dann kann beispielsweise der Seilbahnantrieb 7 von der Seilbahnsteuerung 8 angesteuert werden, um die Fahrgeschwindigkeit zu reduzieren, oder um die Seilbahn 1 zu stoppen. Hierbei könnten für die Auslenkung α und/oder für die Windböe B natürlich auch mehrere Schwellen definiert werden. Damit kann der aktuelle Zustand des Fahrzeugs 4 und des Windes bei Stationseinfahrt 9 von wenig kritisch bis kritisch eingeteilt werden. Bei wenig kritisch wird beispielsweise die Fahrgeschwindigkeit reduziert (auch in mehreren Stufen denkbar) und bei kritisch wird die Seilbahn 1 gestoppt. Die Seilbahnsteuerung 8 könnte die Auslenkung α und die Windböe B natürlich auch unterschiedlich gewichten, beispielsweise um auf besondere Verhältnisse oder Konstruktion einer Seilbahn 1 Rücksicht zu nehmen. Das, oder auch festgelegte Schwellen, könnte auch im Betrieb der Seilbahn 1 verändert werden, um Erfahrungswerte des Betriebes einfließen zu lassen.

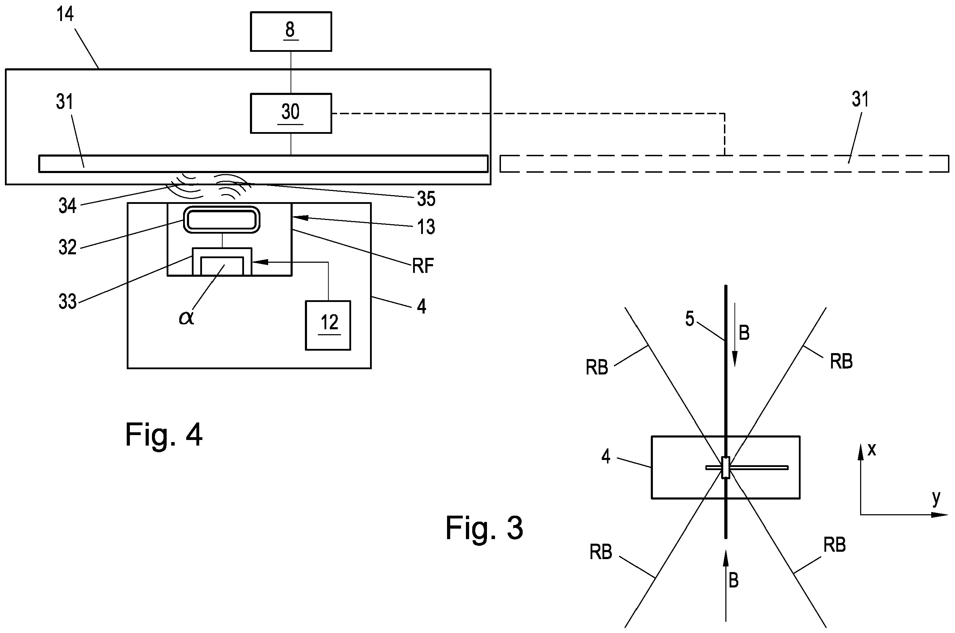

Es kann auch zusätzlich die Richtung R der Windböe B erfasst werden und in der Seilbahnsteuerung 8 bei der Steuerung des Seilbahnantriebs 7 berücksichtigt werden. Beispielsweise könnten für verschiedene Richtungen R, oder Bereich von Richtungen R, andere Schwellen für die Auslenkung α und/oder die Windböe B hinterlegt sein. Es könnte aber auch vorgesehen sein, überhaupt nur Windböen B aus einer bestimmten Richtung R, oder aus einem Bereich der Richtung R, zu berücksichtigen. Beispielsweise könnten nur Windböen B in Fahrtrichtung x oder nur Windböen B in einem Richtungsbereich RB um die Fahrtrichtung x berücksichtigt werden, wie in Fig.3 dargestellt. Es könnte die Windböe B in der Seilbahnsteuerung 8 auch je nach Richtung R unterschiedlich gewichtet werden, womit kritische Richtungen R von Windböen B kritischer sind, als andere. Welche Windböen B mit welcher Richtung R wie in der Seilbahnsteuerung 8 berücksichtigt werden kann natürlich definiert werden und kann vom Seilbahntyp, von der Umgebung der Seilbahn 1, von den Betriebsparametern der Seilbahn, usw. abhängen. Das kann natürlich auch während des Betriebs der Seilbahn 1 geändert werden.

Die Erfassung der Windgeschwindigkeit vw oder der Windböe B, und gegebenenfalls der Richtung R, und der Auslenkung $\alpha$ erfolgt vorzugsweise soweit vor der Stationseinfahrt 9, dass das Fahrzeug 4 gegebenenfalls noch sicher vor der Station 2 abgebremst werden kann. Andererseits sollte die Erfassung nicht zu weit vor der Stationseinfahrt 9 erfolgen, weil die erfassten Werte dann keine Relevanz mehr für die Situation der Stationseinfahrt 9 haben. Wie weit sinnvoll ist, hängt natürlich von der jeweiligen Seilbahn 1 ab. In den meisten Fällen wird die Erfassung in einem Bereich kleiner 80m vor der Stationseinfahrt 9 anzustreben sein. Die Werte der Auslenkung $\alpha$ und die Erfassung der Windböe B, und gegebenenfalls der Richtung R, werden daher vorzugsweise mindestens um den Bremsweg BW des Fahrzeugs 4 vor der Station 2 (Fig.1) erfasst. Der Bremsweg BW des Fahrzeugs 4 ist dabei üblicherweise bekannt. Bei herkömmlichen Seilbahnen 1 mit maximalen Fahrgeschwindigkeiten von typischerweise 7m/s beträgt der Bremsweg BW bei einem Nothalt ca. 25-40m. Häufig befindet sich eine Seilbahnstütze 3 in diesem Bereich vor der Station 2. Damit könnte die Erfassung der Windgeschwindigkeit vw oder der Windböe B, und gegebenenfalls der Richtung R, an einer Seilbahnstütze 3 vor der Station 2 erfolgen.

Der Empfänger 14 ist daher vorzugsweise so angeordnet, dass der Sendebereich der Sendeeinheit 13 ausreicht, um die Auslenkung $\alpha$ von einer ausreichend großen Distanz empfangen zu können. Vorzugsweise ist der Empfänger 14 in der Station 2 angeordnet, könnte aber auch im Bereich der Station 2 vor der Stationseinfahrt 9 angeordnet sein. Beispielsweise könnte der Empfänger 14 auch an einer Seilbahnstütze 3 vor der Station 2 angeordnet sein und über eine entsprechende Kommunikationsleitung mit der Seilbahnsteuerung 8 verbunden sein.

Ganz besonders vorteilhaft zur Übertragung von Information vom Fahrzeug 4 zur Station 2 ist die Verwendung von Funktranspondern RF als Sendeeinrichtung 13 am Fahrzeug 4, wie beispielsweise RFID (Radio Frequency Identification)-Transponder (oftmals auch RFID-Tag genannt), wie anhand der Fig.4 erläutert wird. Im Funktransponder RF am Fahrzeug 4 ist eine Speichereinheit 33 vorgesehen, in der beispielsweise Werte für die Auslenkung $\alpha$ und gegebenenfalls auch Werte für die Windgeschwindigkeit vw oder für Windböen B, und gegebenenfalls der Richtung R, gespeichert werden können. Der Sensor 12 zur Erfassung der Auslenkung $\alpha$ könnte seine Werte beispielsweise in der Speichereinheit 33 des Funktransponders speichern, ebenso ein Windsensor 15, falls dieser am Fahrzeug 4 vorgesehen ist. Ein derartiger Funktransponder RF kann sehr klein ausgeführt werden und kann daher sehr flexibel eingesetzt werden. Im Wirkbereich einer Sendeantenne 31, die ein Abfragesignal 34 aussendet, antwortet der Funktransponder RF mit einem Antwortsignal 35, das die Auslenkung $\alpha$, und gegebenenfalls auch einen Werte der Windböen B und eventuell der Richtung R, enthält. Das Antwortsignal 35 wird von der Sendeantenne 31 empfangen und an ein Lesegerät 30 weitergeleitet, das aus dem Antwortsignal 35 die benötigten Werte decodiert. Das Lesegerät 30 ist mit der Seilbahnsteuerung 8 verbunden und kann die erhaltenen Werte an die Seilbahnsteuerung 8 senden. An ein Lesegerät 30 können auch mehrere Sendeantennen 31 angeschlossen werden, wie in Fig.4 angedeutet. Der Empfänger 14 in der Station 2 könnte daher als Lesegerät 30 mit Sendeantenne 31 ausgeführt sein. Die Sendeantenne 31 müsste dabei so ausgeführt sein, dass das Abfragesignal 34 soweit aus der Station 2 auf die Strecke 2 ausgesendet wird, um möglichst frühzeitig Information vom Fahrzeug 4 zu erhalten.

Die Versorgung eines Fahrzeugs 4 mit elektrischer Energie ist in der Praxis aber aufwendig, weil hierfür in der Regel ein Energiespeicher am Fahrzeug 4 vorgesehen sein muss und der Energiespeicher geladen werden muss, beispielsweise bei der Stationsdurchfahrt. Daher ist es bei einer Seilbahn 1 oftmals erwünscht, die Fahrzeuge 4 ohne elektrische Energieversorgung auszuführen. Das widerspricht natürlich der Forderung, die Auslenkung $\alpha$ des Fahrzeugs 4 zu erfassen und diese an die Seilbahnsteuerung 8 zu übermitteln.

In einer besonders vorteilhaften Ausgestaltung wird daher am Fahrzeug 4 ein passiver Funktransponder verwendet, z.B. ein passiver RFID-Transponder, weil dazu keine Energieversorgung des Funktransponders RF am Fahrzeug 4 notwendig ist. Ein passiver Funktransponder ist nur im Wirkbereich einer Sendeantenne 31 eines Lesegerätes 30, die ein elektromagnetisches Feld aufspannt, aktiv, da der passive Funktransponder RF die elektrische Energie zum Betreiben aus dem von der Sendeantenne 31 ausgesendeten elektromagnetischen Signal gewinnt, das mit einer Empfangsantenne 32 im Funktransponder RF empfangen wird. Damit könnte auch der Sensor 12, und eventuell auch ein Windsensor 15, am Fahrzeug 4 die benötigte elektrische Energie vom passiven Funktransponder RF erhalten.

Bei der Annäherung des Fahrzeugs 4 an die Station 2 kommt der passive Funktransponder RF am Fahrzeug 4 in den Wirkbereich der Sendeantenne 31, womit die Energieversorgung hergestellt ist. Daraufhin wird der Sensor 12, und eventuell auch ein Windsensor 15, gelesen und der erfasste Wert der Auslenkung $\alpha$, und eventuell das Auftreten einer Windböe B und einer Richtung R, mit dem Antwortsignal 35 an das Lesegerät 30 gesendet. Es gibt auch Funktransponder RF mit Sensoreingang, sodass ein Sensor 12, und eventuell auch ein Windsensor 15, auch direkt am Funktransponder RF angeschlossen werden kann, um direkt über den Funktransponder RF ausgelesen zu werden.

In der Speichereinheit 33 des Funktransponders RF könnten natürlich auch noch andere Information gespeichert werden. Beispielsweise könnte in jedem Fahrzeug 4 in der Speichereinheit 33 eine eindeutige Fahrzeugidentifikation FID gespeichert sein, die ebenfalls an die Seilbahnsteuerung 8 übermittelt werden könnte.

Falls der Wirkbereich der Sendeantenne 31 nicht ausreichend weit ist, um die vom Fahrzeug benötigte Information vor dem Bremsweg BW mit einem Funktransponder RF abfragen zu können, könnte auch vorgesehen sein das Lesegerät 30 mit Sendeantenne 31 außerhalb der Station 2 anzuordnen, beispielsweise an der letzten Seilbahnstütze 3 vor der Station 2. Das Lesegerät 30 kann dabei mit der Seilbahnsteuerung 8 oder dem Empfänger 14 in der Station 2 verbunden (kabellos oder kabelgebunden) sein, um die Werte der Auslenkung a, und gegebenenfalls auch der Windböe B und einer Richtung R, zu übermitteln.

Mit einem Funktransponder RF könnte zusätzlich auch Werte der Auslenkung α entlang der Strecke zwischen den Stationen 2 gesammelt werden. Mit Energieversorgung am Fahrzeug 4 könnte beispielsweise in einer vorgegebenen Abtastrate der Sensor 12 ausgelesen werden und in die Speichereinheit 33 abgelegt werden. Im Bereich der Station 2 kann dann die Speichereinheit 33 ausgelesen werden und die gespeicherten Werte von der Seilbahnsteuerung 8 ausgewertet werden. Daraus kann die Seilbahnsteuerung 8 wichtige Information zu den Verhältnissen entlang der Strecke gewinnen, was ebenfalls zum Steuern des Seilbahnantriebes 7 verwendet werden kann. Bei Verwendung eines passiven Funktransponders RF könnten zumindest an gewissen Seilbahnstützen entlang der Strecke ein Lesegerät 30 angeordnet sein, womit im Bereich der Seilbahnstütze der Sensor 12, und vorzugsweise auch die Fahrzeugidentifikation FID, gelesen werden kann. Der derart erfasste Sensorwert kann in der Speichereinheit 33 gespeichert werden und/oder kann von der Seilbahnstütze an die Seilbahnsteuerung 8 übermittelt werden. In der Station 2 könnte die Speichereinheit 33 dann mit einem Lesegerät 30 ausgelesen werden. In diesem Fall ist an der Seilbahnstütze eine elektrische Energieversorgung erforderlich und gegebenenfalls auch eine Datenverbindung zur Seilbahnsteuerung 8.

Die Kommunikationsstrecke zwischen Fahrzeug 4 und Seilbahnsteuerung 8, also beispielsweise Seilbahnsteuerung 8, Lesegerät 30, Sendeantenne 31, Funktransponder RF, kann natürlich auch funktional fehlersicher ausgeführt sein, beispielsweise gemäß einer geforderten Sicherheitsanforderungsstufe (SIL) um eine sichere (im Sinne, dass ein Fehler sofort erkannt wird und das System dann vorzugsweise in einen sicheren Zustand wechselt) Kommunikation im Sinne der funktionalen Sicherheit sicherzustellen. Dazu können hinlänglich bekannte Mechanismen, wie beispielsweise Mehrkanaligkeit in der Hardware, Redundanz in den Daten, Fehlererkennungs- und Fehlerkorrekturmethoden in der Datenübertragung, usw., vorgesehen sein. Beispielsweise könnte jedem Signal 34, 35, oder den darin transportierten Daten, ein Zeitstempel hinzugefügt werden. Wenn die Zeitbasen des Lesegerätes 30 und der Seilbahnsteuerung 8 synchronisiert werden, kann eine Abweichung des Zeitstempels zur synchronisierten Steuerungszeit erkannt werden und z.B. eine Abschaltung der Seilbahn 1 zur Folge haben. Es kann ferner vorgesehen sein, dass die Speichereinheit 33 des Funktransponder RF innerhalb einer vorgegebenen Zeitspanne mehrmals gelesen werden muss, um die gesendeten Daten zu verifizieren. Die im Antwortsignal 35 übertragenen Daten könnten durch redundante Daten, beispielsweise einen CRC (Cyclic Redundancy Code), abgesichert werden. Natürlich sind auch noch weitere Maßnahmen zur Sicherstellung der funktionalen Sicherheit denkbar.

**Patentansprüche**

1. Verfahren zum Betreiben einer Seilbahn (1) mit der zwischen zumindest zwei Stationen (2) eine Anzahl von auf einem Förderseil (5) hängenden Fahrzeugen (4) bewegt werden und an zumindest einem Fahrzeug (4) der Seilbahn (1) mit einem Sensor (12) die Auslenkung (a) des Fahrzeugs (4) aus der Vertikalen gemessen wird, wobei die Auslenkung (a) des Fahrzeugs (4) vor der Stationseinfahrt mit dem Sensor (12) gemessen und an die Seilbahnsteuerung (8) übermittelt wird, **dadurch gekennzeichnet, dass** gleichzeitig mit einem vor der Stationseinfahrt (9) an einer Seilbahnstütze (3) angeordneten Windsensor (15) das Auftreten einer Windböe (B) als zeitliche Änderung einer Windgeschwindigkeit ($v_W$) von der Seilbahnsteuerung (8) erfasst wird **und dass** die Seilbahnsteuerung (8) die übermittelte Auslenkung (a) des Fahrzeugs (4) und die erfasste Windböe (B) verknüpft und damit einen Seilbahnantrieb (7) in Abhängigkeit von der übermittelten Auslenkung (a) und von der erfassten Windböe (B) steuert.

2. Verfahren nach Anspruch 1, **dadurch gekennzeichnet, dass** die Richtung (R) der Windböe (B) von der Seilbahnsteuerung (8) erfasst wird und bei der Steuerung des Seilbahnantriebs (7) berücksichtigt wird.

3. Verfahren nach Anspruch 2, **dadurch gekennzeichnet, dass** nur Windböen (B) aus einer definierten Richtung (R) in der Seilbahnsteuerung (8) berücksichtigt werden.

4. Verfahren nach Anspruch 2, **dadurch gekennzeichnet, dass** Windböen (B) aus verschiedenen Richtungen (R) in der Seilbahnsteuerung (8) verschieden berücksichtigt werden.

**5.** Verfahren nach einem der Ansprüche 1 bis 4, **dadurch gekennzeichnet, dass** die Auslenkung des Fahrzeugs (4) und das Auftreten der Windböe (B) in einem Abstand vor der Stationseinfahrt (9), der größer als der Bremsweg (BW) des Fahrzeugs (4) ist, von der Seilbahnsteuerung (8) erfasst wird.

**6.** Verfahren nach einem der Ansprüche 2 bis 4, **dadurch gekennzeichnet, dass** die Richtung (R) der Windböe (B) in einem Abstand vor der Stationseinfahrt (9), der größer als der Bremsweg (BW) des Fahrzeugs (4) ist, von der Seilbahnsteuerung (8) erfasst wird.

**7.** Verfahren nach einem der Ansprüche 1 bis 6, **dadurch gekennzeichnet, dass** die Auslenkung (a) des Fahrzeugs (4) mit einem Funktransponder (RF) am Fahrzeug (4) an die Seilbahnsteuerung (8) übermittelt wird.

**8.** Verfahren nach Anspruch 7, **dadurch gekennzeichnet, dass** ein passiver Funktransponder (RF) verwendet wird und der passive Funktransponder (RF) die elektrische Energie zum Übermitteln der Auslenkung (a) aus einem vom Funktransponder (RF) empfangenen Abfragesignal (34) gewinnt.

**9.** Verfahren nach Anspruch 8, **dadurch gekennzeichnet, dass** das Fahrzeug (4) die elektrische Energie zum Auslesen des Sensors (12) vom passiven Funktransponder (RF) erhält.

**10.** Seilbahn mit einer Anzahl von auf einem Förderseil hängenden Fahrzeugen (4), die zwischen zumindest zwei Stationen (2) bewegbar sind, wobei an zumindest einem Fahrzeug (4) der Seilbahn ein Sensor (12) zur Erfassung der Auslenkung (a) des Fahrzeugs (4) aus der Vertikalen angeordnet ist, wobei eine Seilbahnsteuerung (8) vorgesehen ist, die mit einem Seilbahnantrieb (7) verbunden ist und die den Seilbahnantrieb (7) steuert, und am Fahrzeug (4) eine Sendeeinrichtung (13) angeordnet ist, um die mit dem Sensor (12) gemessene Auslenkung (a) des Fahrzeugs (4) vor der Stationseinfahrt (9) an einen Empfänger (14) im Bereich der Station (2) zu übermitteln, wobei der Empfänger (14) mit der Seilbahnsteuerung (8) verbunden ist und der Empfänger (14) die Auslenkung (a) an die Seilbahnsteuerung (8) übermittelt, **dadurch gekennzeichnet, dass** vor der Stationseinfahrt (9) an einer Seilbahnstütze (3) ein Windsensor (15) angeordnet ist, der mit der Seilbahnsteuerung (8) verbunden ist und der das Auftreten einer Windböe (B), als zeitliche Änderung einer Windgeschwindigkeit (vw), vor der Stationseinfahrt (9) erfasst und an die Seilbahnsteuerung (8) übermittelt **und dass** die Seilbahnsteuerung (8) die übermittelte Auslenkung (a) und die übermittelte Windböe (B) verknüpft und damit den Seilbahnantrieb (7) in Abhängigkeit von der übermittelten Auslenkung (a) und von der erfassten Windböe (B) steuert.

**11.** Seilbahn nach Anspruch 10, **dadurch gekennzeichnet, dass** am Fahrzeug (4) als Sendeeinrichtung (13) ein Funktransponder (RF) vorgesehen und der Empfänger (14) als Lesegerät (30) für den Funktransponder (RF) ausgeführt ist.

**12.** Seilbahn nach Anspruch 11, **dadurch gekennzeichnet, dass** als Funktransponder (RF) ein passiver Funktransponder (RF) vorgesehen ist und das Lesegerät (30) über eine Sendeantenne (31) ein Abfragesignal (34) aussendet, das der Funktransponder (RF) empfängt und daraus die elektrische Energie zum Betreiben des Funktransponders (RF) und des Sensors (12) gewinnt.

**Claims**

**1.** Method for operating a cable car (1) with which a number of vehicles (4) hanging on a hoisting cable (5) are moved between at least two stations (2) and on at least one vehicle (4) of the cable car (1), the deflection (a) of the vehicle (4) from the vertical is measured with a sensor (12), wherein the deflection (a) of the vehicle (4) is measured with the sensor (12) before the station entrance and transmitted to the cable car control unit (8), **characterized in that** at the same time the occurrence of a wind gust (B) as temporal change of the wind speed ($v_w$) is detected by the cable car control unit (8) with a wind sensor (15) aranged on a cable car tower (3) before the station entrance (9) **and that** the cable car control unit (8) combines the transmitted deflection (a) of the vehicle (4) and the detected wind gust (B) for controlling a cable car drive (7) as a function of the transmitted deflection (a) and of the detected wind gust (B).

**2.** The method of claim 1, **characterized in that** the direction (R) of the wind gust (B) is detected by the cable car control unit (8) and is taken into account when controlling the cable car drive (7).

**3.** The method of claim 2, **characterized in that** only wind gusts (B) from a defined direction (R) are taken into account in the cable car control unit (8).

**4.** The method of claim 2, **characterized in that** wind gusts (B) from different directions (R) are taken into account in different manners in the cable car control unit (8).

**5.** The method of one of claims 1 to 4, **characterized in that** the deflection of the vehicle (4) and the occurrence of the wind gust (B) is detected by the cable car control unit (8) at a distance before the station entrance (9), which is larger than the braking distance (BW) of the vehicle (4).

6. The method of one of the claims 2 to 4, **characterized in that** the direction (R) of the wind gust (B) is detected by the cable car control unit (8) at a distance before the station entrance (9), which is larger than the braking distance (BW) of the vehicle (4).

7. The method of one of claims 1 to 6, **characterized in that** the deflection (a) of the vehicle (4) is transmitted to the cable car control unit (8) by means of a radio transponder (RF) on the vehicle (4).

8. The method of claim 7, **characterized in that** a passive radio transponder (RF) is used and the passive radio transponder (RF) obtains the electrical energy for transmitting the deflection (a) from a polling signal (34) received by the radio transponder (RF).

9. The method of claim 8, **characterized in that** the vehicle (4) obtains the electrical energy for reading out the sensor (12) from the passive radio transponder (RF).

10. Cable car with a number of vehicles (4) hanging on a hoisting cable, which are movable between at least two stations (2), wherein a sensor (12) for detecting the deflection (a) of the vehicle (4) from the vertical is arranged on at least one vehicle (4) of the cable car, wherein a cable car control unit (8) is provided, which is connected to a cable car drive (7) and controls the cable car drive (7) and a transmitting device (13) is arranged on the vehicle (4) in order to transmit the deflection (a) of the vehicle (4) measured by the sensor (12) before the station entrance (9) to a receiver (14) in the area of the station (2), whereas the receiver (14) being connected to the cable car control unit (8) and the receiver (14) transmitting the deflection (a) to the cable car control unit (8), **characterized in that** on a cable car tower (3) before the station entrance (9) a wind sensor (15) is arranged which is connected to the cable car control unit (8) and which detects the occurrence of a wind gust (B), as temporal change of the wind speed ($v_w$), before the station entrance (9) and transmits the detected occurrence of a wind gust (B) to the cable car control (8) **and that** the cable car control unit (8) combines the transmitted deflection (a) of the vehicle (4) and the detected wind gust (B) for controlling the cable car drive (7) as a function of the transmitted deflection (a) and the detected wind gust (B).

11. The cable car of claim 10, **characterized in that** a radio transponder (RF) is provided on the vehicle (4) as a transmitting device (13) and the receiver (14) is designed as a reader (30) for the radio transponder (RF).

12. The cable car of claim 11, **characterized in that** a passive radio transponder (RF) is provided as a radio transponder (RF), and the reader (30) transmits a polling signal (34) via a transmitting antenna (31), which is received by the radio transponder (RF) and obtains therefrom the electrical energy for operating the radio transponder (RF) and the sensor (12).

**Revendications**

1. Procédé de fonctionnement d'un téléphérique (1) au moyen duquel un certain nombre de véhicules (4) suspendus à un câble de transport (5) sont déplacés entre au moins deux stations (2) et la déviation (a) du véhicule (4) par rapport à la verticale est mesurée sur au moins un véhicule (4) du téléphérique (1) au moyen d'un capteur (12), la déviation (a) du véhicule (4) avant l'entrée dans la station étant mesurée au moyen du capteur (12) et transmise à la commande de téléphérique (8), **caractérisé en ce que,** en même temps, l'apparition d'une rafale de vent (B) est détectée par la commande de téléphérique (8) au moyen d'un capteur de vent (15), disposé sur un support de téléphérique (3) avant l'entrée (9) dans la station, en tant que modification temporelle d'une vitesse de vent ($v_w$) et **en ce que** la commande de téléphérique (8) relie la déviation transmise (a) du véhicule (4) et la rafale de vent détectée (B) et commande ainsi un entraînement de téléphérique (7) en fonction de la déviation transmise (a) et de la rafale de vent détectée (B).

2. Procédé selon la revendication 1, **caractérisé en ce que** la direction (R) de la rafale de vent (B) est détectée par la commande de téléphérique (8) et est prise en compte lors de la commande de l'entraînement de téléphérique (7).

3. Procédé selon la revendication 2, **caractérisé en ce que** seules les rafales de vent (B) provenant d'une direction définie (R) sont prises en compte dans la commande de téléphérique (8).

4. Procédé selon la revendication 2, **caractérisé en ce que** les rafales de vent (B) provenant de directions différentes (R) sont prises en compte différemment dans la commande de téléphérique (8).

5. Procédé selon l'une des revendications 1 à 4, **caractérisé en ce que** la déviation du véhicule (4) et l'apparition de la rafale de vent (B) à une distance de l'entrée (9) dans la station supérieure à la distance de freinage (BW) du véhicule (4) sont détectées par la commande de téléphérique (8).

6. Procédé selon l'une des revendications 2 à 4, **caractérisé en ce que** la direction (R) de la rafale de vent (B) à une distance de l'entrée (9) dans la station supérieure à la distance de freinage (BW) du véhicule (4) est détectée par la commande de téléphérique (8).

7. Procédé selon l'une des revendications 1 à 6, **caractérisé en ce que** la déviation (a) du véhicule (4) est transmise à la commande de téléphérique (8) au moyen d'un transpondeur radio (RF) sur le véhicule (4).

8. Procédé selon la revendication 7, **caractérisé en ce qu'**un transpondeur radio passif (RF) est utilisé et que le transpondeur radio passif (RF) obtient l'énergie électrique pour la transmission de la déviation (a) à partir d'un signal de demande (34) reçu par le transpondeur radio (RF).

9. Procédé selon la revendication 8, **caractérisé en ce que** le véhicule (4) reçoit l'énergie électrique pour la lecture du capteur (12) par le transpondeur radio passif (RF).

10. Téléphérique comportant un certain nombre de véhicules (4) suspendus à un câble de transport, qui peuvent être déplacés entre au moins deux stations (2), un capteur (12) servant à la détection de la déviation (a) du véhicule (4) par rapport à la verticale étant disposé sur au moins un véhicule (4) du téléphérique, une commande de téléphérique (8) étant prévue, laquelle est reliée à un entraînement de téléphérique (7) et commande l'entraînement de téléphérique (7), et un moyen d'émission (13) étant disposé sur le véhicule (4) afin de transmettre la déviation (a) du véhicule (4) avant l'entrée (9) dans la station, mesurée au moyen du capteur (12), à un récepteur (14) dans la zone de la station (2), le récepteur (14) étant relié à la commande de téléphérique (8) et le récepteur (14) transmettant la déviation (a) à la commande de téléphérique (8), **caractérisé en ce qu'**un capteur de vent (15) est disposé sur un support de téléphérique (3) avant l'entrée (9) dans la station, lequel capteur de vent est relié à la commande de téléphérique (8) et détecte l'apparition d'une rafale de vent (B) avant l'entrée (9) dans la station en tant que modification temporelle d'une vitesse de vent ($v_w$) et la transmet à la commande de téléphérique (8), **et en ce que** la commande de téléphérique (8) relie la déviation transmise (a) et la rafale transmise (B) et commande ainsi l'entraînement de téléphérique (7) en fonction de la déviation transmise (a) et de la rafale de vent détectée (B).

11. Téléphérique selon la revendication 10, **caractérisé en ce qu'**un transpondeur radio (RF) est prévu sur le véhicule (4) en tant que moyen d'émission (13) et que le récepteur (14) est conçu en tant que dispositif de lecture (30) destiné au transpondeur radio (RF).

12. Téléphérique selon la revendication 11, **caractérisé en ce qu'**un transpondeur radio passif (RF) est prévu en tant que transpondeur radio (RF) et que le dispositif de lecture (30) émet, par l'intermédiaire d'une antenne d'émission (31), un signal de demande (34) que le transpondeur radio (RF) reçoit et à partir duquel il obtient l'énergie électrique pour le fonctionnement du transpondeur radio (RF) et du capteur (12).

Fig. 1

Fig. 2

Fig. 4

Fig. 3

EP 3 649 029 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1837264 A2
- AT 411982 B
- WO 9530216 A1
- EP 2147843 A1